# EUROPÄISCHE PATENTSCHRIFT

(11) **EP 0 456 997 B1**
(45) Veröffentlichungstag und Bekanntmachung des Hinweises auf die Patenterteilung: **20.12.1995**
(21) Anmeldenummer: 91104642.3
(22) Anmeldetag: 25.03.1991
(51) Int. Cl.: B01D 33/073, B01D 33/46, B01D 33/50, B01D 33/64

(54) **Vorrichtung zum Trennen von Feststoffen aus einer Flüssigkeit**
Device for separating solids from a liquid
Dispositif de séparation des solides d'un liquide

(30) Priorität: 15.05.1990 DE 4015532
(43) Veröffentlichungstag der Anmeldung: 21.11.1991
(73) Patentinhaber: DIA PUMPENFABRIK HAMMELRATH UND SCHWENZER GmbH & Co. KG, 40223 Düsseldorf (DE)
(72) Erfinder: Espey, Georg, W-4630 Bochum 1 (DE); Hüppe, Hans L., Dipl.-Ing., W-4000 Düsseldorf 13 (DE)
(74) Vertreter: Stenger, Watzke & Ring Patentanwälte

(56) Entgegenhaltungen:
- CH-A- 94 019
- DE-A- 224 627
- FR-E- 61 559
- GB-A- 796 631
- US-A- 3 772 144

## Beschreibung

Die Erfindung betrifft eine Vorrichtung zum Trennen von Feststoffen aus einer Flüssigkeit, mittels eines teilweise in das Feststoff-Flüssigkeits-Gemisch eintauchenden, zwischen Aufgabe und Austrag angeordneten, drehbar gelagerten Trommelsiebes mit Mitnehmerschaufeln zum Fördern der Feststoffe zu dem Austrag, wobei die Aufgabe des Feststoff-Flüssigkeits-Gemisches von außen auf die Mantelfläche erfolgt und dessen Zulauf und Austragskanal gegen die Abflußseite abgedichtet sind.

Aus dem DE-U 88 13 247 ist eine Vorrichtung zum Trennen von Feststoffen aus einer Flüssigkeit bekannt, vorzugsweise zum Aussondern von Sand oder dgl. aus einem Schwemmstrom. Hierbei fließt der Schwemmstrom in axialer Richtung durch eine drehbar gelagerte Siebtrommel und wird durch eine diskontinuierliche Querschnittserweiterung verlangsamt. Dabei sedimentieren die größeren Feststoffteile aus und gelangen durch die Siebtrommel hindurch auf den Boden des Schwemmkanals. Anschließend werden die Feststoffteile mittels Mitnehmerschaufeln, welche außen an der Siebtrommel befestigt sind, heraustransportiert. Das Aussondern der Feststoffteile erfolgt also ausschließlich durch Sedimentation, was den Nachteil hat, daß die Korngröße der noch durchzulassenen Feststoffteile schwer beeinflußbar ist und nicht sichergestellt werden kann, daß alle größeren Feststoffteile ausgesondert werden.

Es ist ferner aus der DE-A 37 15 022 eine Trennvorrichtung zur kontinuierlichen Abtrennung fester Bestandteile aus einem Feststoff-Flüssigkeit-Gemisch bekannt. Diese vorbekannte Vorrichtung hat eine im Betrieb in einer bestimmten Drehrichtung rotierende Siebtrommel, welche in einem Behälter angeordnet ist. Das Feststoff-Flüssigkeit-Gemisch wird über eine Zuflußleitung auf die Außenseite des Trommelmantels aufgegeben. Die Abtrennung des Feststoffes aus dem Gemisch erfolgt durch einen Druckunterschied zwischen einem Strömungsraum auf der Außenseite und dem Innenraum der Siebtrommel. Demzufolge findet in dieser vorbekannten Vorrichtung keine Sedimentation der Feststoffe statt, sondern vielmehr ein Anhaften aller Feststoffe an der Mantelfläche der Siebtrommel, welche dann durch einen Abstreifer von der Mantelfläche abgeschabt werden. Bei dieser vorbekannten Vorrichtung ist es nachteilig, daß die Siebtrommel nach einem längeren Betrieb gereinigt werden muß, da die Feststoffe die Siebtrommel zusetzen, so daß ein kontinuierlicher Betrieb dieser Vorrichtung nicht möglich ist.

Schließlich ist aus der DE-A 34 33 435 eine Siebvorrichtung zur Reinigung von Wässern und Abwässern bekannt. Diese Vorrichtung weist eine Siebtrommel auf, welche in einem mit rechteckigem Querschnitt ausgebildeten Fließgerinne angeordnet ist. Der Zufluß eines Feststoff-Flüssigkeit-Gemisches erfolgt auf eine durch eine Stirnwand geschlossene Stirnfläche der Siebtrommel. Das Gemisch fließt dann über die als Sieb ausgebildete Mantelfläche und über die zweite, offene Stirnfläche der Siebtrommel ab. Hierbei wird die Flüssigkeit von den Feststoffen getrennt, welche sich entweder an der Mantelfläche der Siebtrommel oder unterhalb der Siebtrommel anlagern. Diese Feststoffe werden kontinuierlich oder diskontinuierlich mittels an der Siebtrommel oder Zahnriemen angeordneten Förderleisten ausgetragen. Nachteilig bei dieser bekannten Vorrichtung ist, daß eine Sedimentation der Feststoffteile in dem Fließgerinne nicht möglich ist.

Bei einer in der GB-A 796 631 beschriebenen Vorrichtung befindet sich ein Trommelsieb, welches starr oder um seine eigene Achse drehbar ist, teilweise in einem Sedimentationsbecken, in dem sich die Feststoffe des auf Höhe der Trommelachse zugeführten Feststoff-Flüssigkeit-Gemisches absetzen. Am Umfang der Trommel sind zwei Ringscheiben angeordnet, zwischen denen Schaufeln angeordnet sind, die sich bei starrer Trommel auf einer Kreisbahn um diese herum bewegen. Im Fall der Verwendung einer drehenden Trommel sind die Schaufeln mit dieser drehfest verbunden, ohne den Umfang der Trommel und damit des Trommelsiebes zu berühren. Die Schaufeln schleifen mit ihren äußeren Flanken an dem das Sedimentationsbecken bildenden Gehäuse entlang, und transportieren die angefallenen Feststoffe bis in eine Position oberhalb der Trommel. Dort findet mittels einer Rolle oder einer schrägstehenden Fläche eine Verdichtung des auf den Schaufeln befindlichen Feststoffmaterials statt, wodurch dieses entwässert wird. Ein gelenkig in dem Gehäuse angeordneter Abstreifer streicht mit einer Klinge über die Schaufeln und streift hierbei die dort angesammelten, verdichteten Feststoffe in einen Austrag ab. Nachteilig bei dieser Vorrichtung ist, daß sich in dem zwischen der Umfangsfläche der Siebtrommel und den Schaufeln verbleibenden Spalt Feststoffe anlagern können, die nicht in den Austrag gelangen. Zwar sieht die bekannte Vorrichtung zur Entfernung dieser Feststoffanteile einen an einer der Schaufeln befestigten Schaber vor, jedoch fördert dieser die abgelösten Feststoffe wieder zurück in das Sedimentationsbecken, so daß die Trennung von Flüssigkeit und Feststoffen unbefriedigend bleibt.

Ausgehend von einem Stand der Technik gemäß der DE-A 34 33 435 liegt der Erfindung die **Aufgabe** zugrunde, eine Vorrichtung zu schaffen, mit der das Trennen von Feststoffen aus einer Flüssigkeit bis auf einen auf die Siebweite genau abgestimmten Durchgang möglich ist und bei der die Feststoffe weitestgehend entwässert werden.

Als technische **Lösung** dieser Aufgabenstellung wird vorgeschlagen, daß das Trommelsieb in einem Becken, in dem sich die Feststoffe unter dem Einfluß der Schwerkraft absetzen, angeordnet ist, daß die Mitnehmerschaufeln auf dem Umfang des Trommelsiebes angeordnet und an diesem befestigt sind, daß eine Verdichtung des Mittels der Mitnehmerschaufeln aus dem Becken geförderten Feststoffes mittels Schwerkraft und mittels einer am Ende des Austragskanals angeordneten Druckpforte erfolgt und daß hinter dem Austragskanal ein Abstreifer zum Entfernen der verdichteten Feststoffe von dem Trommelsieb vorgesehen ist und daß der Abstreifer (12) im Rhythmus des Durchganges der Mitnehmerschaufeln (2) zwangsgesteuert ist.

Die mit dieser technischen Lehre erzielbaren **Vorteile** bestehen darin, daß die großen Feststoffteile sedimentieren, bedingt durch die diskontinuierliche Querschnittserweiterung beim Übergang vom Zulauf in das Sedimentationsbecken und die damit verbundene Senkung der Strömungsgeschwindigkeit, ohne das Trommelsieb berührt zu haben. Dadurch wird das Trommelsieb vor unnötiger Verschmutzung bzw. Verstopfung bewahrt und die Effektivität der Anlage deutlich erhöht.

Die Aufgabe wird von außen auf das Trommelsieb aufgegeben, wobei die Feststoffteile bis auf einen von der Siebweite bestimmten Durchgang zurückgehalten werden und die gereinigte Flüssigkeit in das Innere des Trommelsiebes gelangt. Ein Abdichten des Zulaufes und des Austragskanales, z. B. durch an den Stirnseiten des Trommelsiebes angebrachte bis zum Gehäuse reichende Ringscheiben, gegenüber dem Auslauf verhindert ein unkontrolliertes Entweichen von Feststoffteilchen.

Der Austrag wird dann von am Trommelsieb befestigten Mitnehmerschaufeln erfaßt und durch den Austragskanal abtransportiert. Während der Aufwärtsbewegung der Mitnehmerschaufel wird der Austrag, bedingt durch die Schwerkraft, verdichtet. Durch im Austragskanal befindliche Druckpforten wird der Austrag zusätzlich mechanisch verdichtet. Die Verdichtung des Austrags hat den Vorteil, daß weitere Flüssigkeit aus dem Austrag herausgepreßt wird und durch das Trommelsieb oder z.B. siebartig ausgestaltete Mitnehmerschaufeln abtropfen kann.

Die Druckpforte kann vorzugsweise drehbar gelagert sein, um der Mitnehmerschaufel ausweichen zu können und um einen genügend großen Anpreßdruck bereitzustellen, mit einem justierbaren Gewicht belastet werden. Ein Anordnen der Druckpforte am Ende des Austragskanales ermöglicht eine einfache Montage und Justierung des Gewichtes. Eine als Blattfeder ausgestaltete Druckpforte hat den Vorteil geringerer Baugröße, so daß hiervon mehrere Druckpforten, z.B. im Austragskanal angeordnet werden können.

Nachdem der Austrag verdichtet und weitgehend von der Flüssigkeit getrennt ist, wird er mittels eines Abstreifers vom Trommelsieb entfernt. Um den Austrag besser weitertransportieren zu können, ist der Abstreifer hinter dem Austragskanal angeordnet. Der Abstreifer ist beweglich gelagert und wird im Rhythmus des Durchgangs der Mitnehmerschaufeln zwangsgesteuert, um eine Kollision des Abstreifers mit der Mitnehmerschaufel zu verhindern.

Um ein effektives Arbeiten des Trommelsiebes zu gewährleisten, wird es nach Ablauf jeden Arbeitsganges gereinigt, z.B. mit einer Flüssigkeitsdusche und/oder Ultraschall.

Die Mitnehmerschaufeln sind gleichmäßig über das Trommelsieb verteilt und bestehen aus einem starren Schaufelfuß und einem biegsamen Schaber, um ein Festklemmen der Feststoffteilchen, z.B. durch Steine zwischen der Mitnehmerschaufel und dem Gehäuse, zu vermeiden und Beschädigungen der Anlage zu verhindern.

Die gereinigte Flüssigkeit fließt aus dem Inneren des Trommelsiebes durch die offenen Stirnseiten in axialer Richtung heraus in ein Sammelbecken, so daß die gereinigte Flüssigkeit durch den Ablauf abgesaugt werden kann.

Weitere Einzelheiten und Vorteile eines erfindungsgemäß ausgebildeten Trommelsiebes ergeben sich aus der nachfolgenden BeSchreibung der zugehörigen Zeichnungen, in der eine bevorzugte Ausführungsform dargestellt worden ist. In den Zeichnungen zeigen:

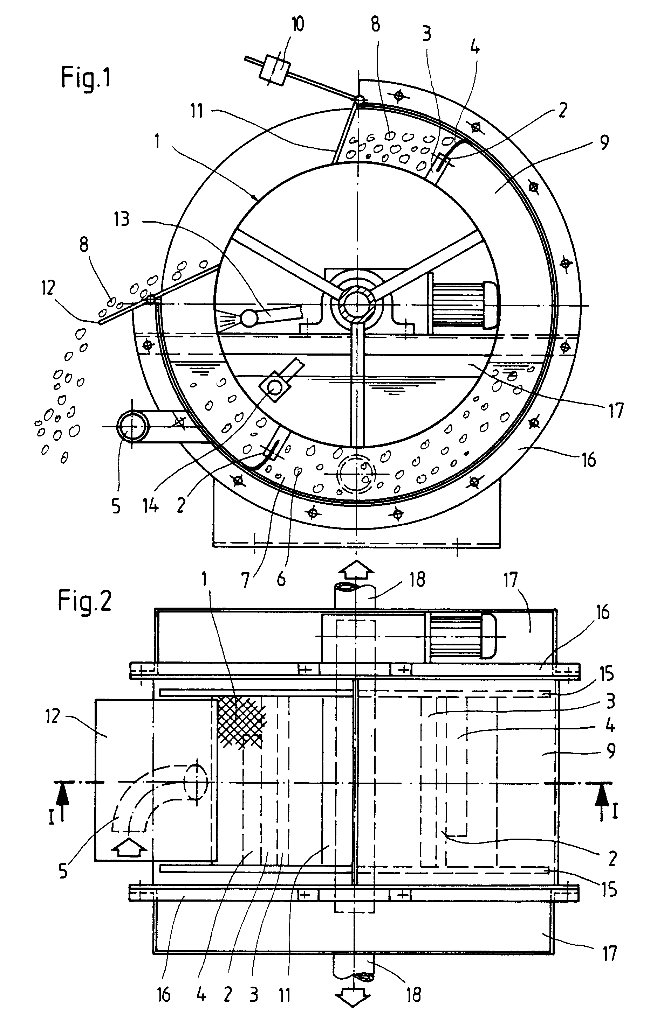

- Fig. 1: ein Trommelsieb, geschnitten entlang der Linie I-I in Fig. 2, in Seitenansicht;
- Fig. 2: das Trommelsieb in Draufsicht;

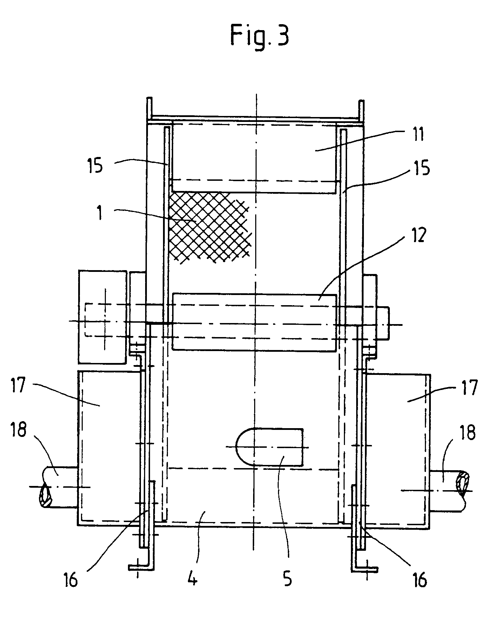

- Fig. 3: das Trommelsieb in Frontansicht.

Ein drehbar gelagertes, zylindrisches Trommelsieb 1 ist mit gleichmäßig auf dem Umfang verteilten Mitnehmerschaufeln 2 versehen. Die Mitnehmerschaufeln 2 bestehen aus einem starren Schaufelfuß 3 und einem flexiblen Schaber 4. Über einen Zulauf 5 gelangt eine Aufgabe 6 unter Druck in ein Sedimentationsbecken 7. Durch kontinuierliches oder intervallmäßiges Drehen des Trommelsiebes 1 transportieren die dort befestigten Mitnehmerschaufeln 2 den Austrag 8 durch einen Austragskanal 9 an einer mit einem Gewicht 10 belasteten Druckpforte 11 vorbei zu einem beweglich, zwangsgesteuerten Abstreifer 12. Der Abstreifer 12 wird im Rhythmus der Mitnehmerschaufeln 2 derart bewegt, daß eine Kollision des Abstreifers 12 mit den Mitnehmerschaufeln 2 vermieden wird. Eine Flüssigkeitsdusche 13 und eine Ultraschalleinrichtung 14 reinigen das Trommelsieb 1 von eventuellen Rückständen.

Der Austragskanal 9 und das Sedimentationsbecken 7 werden durch das Trommelsieb 1, durch an den Stirnseiten des Trommelsiebes 1 befestigte Ringscheiben 15 und durch das Gehäuse 16 derart begrenzt, daß die Flüssigkeit nur durch das Trommelsieb 1 herausfließen kann.

Die durch das Trommelsieb 1 von außen nach innen hindurchtretende Flüssigkeit ist bis auf einen durch die Siebweite bestimmten Durchgang von Feststoffen gereinigt. Die Flüssigkeit fließt axial aus dem Trommelsieb 1 heraus in ein Sammelbecken 17 und wird über einen Ablauf 18 abtransportiert.

Die Druckpforte 11 wird mit einem justierbaren Gewicht 10 belastet um den Austrag zu verdichten. Die Schaber 4 der einzelnen Mitnehmerschaufeln 2 erstrecken sich nicht über die gesamte Breite des Austragskanales 9, wohl aber die Schaufelfüße 3. Der Austragskanal 9 und das Sedimentationsbecken 7 sind derart gestaltet, daß sie einen konstanten Querschnitt aufweisen und die Mitnehmerschaufeln 2 diesen komplett überstreichen.

Anwendungsmöglichkeiten der erfindungsgemäßen Vorrichtung sind z.B
- das Heraustrennen von Borsten aus dem Wasserschwemmkanal von Schlachtereien;
- das Heraustrennen von Kernen, Fruchtteilen oder Schalenresten in der Getränkeproduktion oder
- das Heraustrennen von Feststoffen zum Zwecke ihrer Wiederverwertung in der Abfallbeseitigung oder in Kläranlagen.

## Patentansprüche

1. Vorrichtung zum Trennen von Feststoffen aus einer Flüssigkeit, mittels eines teilweise in das Feststoff-Flüssigkeit-Gemisch eintauchenden, zwischen Aufgabe und Austrag angeordneten, drehbar gelagerten Trommelsiebes mit Mitnehmerschaufeln zum Fördern der Feststoffe zu dem Austrag, wobei die Aufgabe des Feststoff-Flüssigkeit-Gemisches von außen auf die Mantelfläche erfolgt und dessen Zulauf und Austragskanal gegen die Abflußseite abgedichtet sind,
**dadurch gekennzeichnet,**
daß das Trommelsieb (1) in einem Becken (7), in dem sich die Feststoffe unter dem Einfluß der Schwerkraft absetzen, angeordnet ist, daß die Mitnehmerschaufeln (2) auf dem Umfang des Trommelsiebes (1) angeordnet und an diesem befestigt sind, daß eine Verdichtung des mittels der Mitnehmerschaufeln (2) aus dem Becken (7) geförderten Feststoffes mittels Schwerkraft und mittels einer am Ende des Austragskanals (9) angeordneten Druckpforte (11) erfolgt und daß hinter dem Austragskanal (9) ein Abstreifer (12) zum Entfernen der verdichteten Feststoffe von dem Trommelsieb (1) vorgesehen ist und daß der Abstreifer (12) im Rhythmus des Durchganges der Mitnehmerschaufeln (2) zwangsgesteuert ist.

2. Vorrichtung nach Anspruch 1, dadurch gekennzeichnet, daß der Zulauf (5) einen kleineren Querschnitt als das Becken (7), in dem sich die Feststoffe unter dem Einfluß der Schwerkraft absetzen, aufweist.

3. Vorrichtung nach Anspruch 1, dadurch gekennzeichnet, daß die Druckpforte (11) drehbar gelagert und mittels eines justierbaren Gewichtes (10) belastet ist.

4. Vorrichtung nach Anspruch 1, dadurch gekennzeichnet, daß die Druckpforte (11) als Blattfeder ausgestaltet ist.

5. Vorrichtung nach Anspruch 1, gekennzeichnet durch eine auf das Trommelsieb (1) ausgerichtete Flüssigkeitsdusche (13) zum Reinigen des Trommelsiebes (1).

6. Vorrichtung nach Anspruch 1, gekennzeichnet durch eine in der Nähe des Trommelsiebes (1) angeordnete Ultraschalleinrichtung (14) zum Reinigen des Trommelsiebes (1).

7. Vorrichtung nach Anspruch 1, gekennzeichnet durch Mitnehmerschaufeln (2) bestehend aus einem starren Schaufelfuß (3) und einem biegsamen Schaber (4).

8. Vorrichtung nach Anspruch 7, dadurch gekennzeichnet, daß die Schaber (4) sich nur über einen Teilbereich des Austragskanales (9) erstrecken.

9. Vorrichtung nach den Ansprüchen 1 und 8, dadurch gekennzeichnet, daß die Schaber (4) gegeneinander versetzt angeordnet sind.

10. Vorrichtung nach Anspruch 1, dadurch gekennzeichnet, daß die Mitnehmerschaufeln (2) als Sieb ausgestaltet sind.

11. Vorrichtung nach Anspruch 1, dadurch gekennzeichnet, daß der Abfluß der Flüssigkeit in axialer Richtung des Trommelsiebes (1) verläuft.

12. Vorrichtung nach Anspruch 1, dadurch gekennzeichnet, daß der Austragskanal (9) mit an den Stirnseiten des Trommelsiebes (1) befestigten Ringscheiben (15) zum Abfluß hin abgedichtet ist.

## Claims

1. Device for separating solids from a liquid, by means of a rotatably mounted drum screen which is dipped partially into the solid/liquid mixture, is arranged between the feed and the delivery and has carrier paddles for conveying solids to the delivery, the feed of the solid/liquid mixture taking place from outside to the outer surface and its inlet and delivery channel being sealed off relative to the drainage side, characterized in that the drum screen (1) is arranged in a basin (7) in which the solids are deposited under the influence of gravity, in that the carrier paddles (2) are arranged on the circumference of the drum screen (1) and are attached thereto, in that a compaction of the solid conveyed out of the basin (7) by means of the carrier paddles (2) takes place by means of gravity and by means of a pressure gate (11) arranged at the end of the delivery channel (9), and in that a stripper (12) is provided behind the delivery channel (9) for removing the compacted solids from the drum screen (1), and in that the stripper (12) is under forced control in the rhythm of the passing of the carrier paddles (2).

2. Device according to Claim 1, characterized in that the inlet (5) has a smaller cross-section than the basin (7) in which the solids are deposited under the influence of gravity.

3. Device according to Claim 1, characterized in that the pressure gate (11) is mounted rotatably and is loaded by means of an adjustable weight (10).

4. Device according to Claim 1, characterized in that the pressure gate (11) is designed as a leaf spring.

5. Device according to Claim 1, characterized by a liquid shower (13) aligned with the drum screen (1) for cleaning the drum screen (1).

6. Device according to Claim 1, characterized by an ultrasound apparatus (14) arranged near to the drum screen (1) for cleaning the drum screen (1).

7. Device according to Claim 1, characterized by carrier paddles (2) consisting of a rigid paddle base (3) and a flexible scraper (4).

8. Device according to Claim 7, characterized in that the scrapers (4) extend only over a partial region of the delivery channel (9).

9. Device according to Claims 1 and 8, characterized in that the scrapers (4) are arranged offset relative to one another.

10. Device according to Claim 1, characterized in that the carrier paddles (2) are designed as a screen.

11. Device according to Claim 1, characterized in that the drainage of the liquid runs in the axial direction of the drum screen (1).

12. Device according to Claim 1, characterized in that the delivery channel (9) is sealed off towards the drainage by annular discs (15) attached to the end faces of the drum screen (1).

## Revendications

1. Dispositif de séparation des solides d'un liquide au moyen d'un crible-tambour qui est partiellement immergé dans le mélange solides-liquide et est monté avec possibilité de rotation entre l'entrée et la sortie et qui comporte des pales d'entraînement pour déplacer les solides vers la sortie, l'alimentation en mélange solides-liquide s'effectuant par l'extérieur sur la surface périphérique, et sa conduite d'arrivée et son canal de sortie étant étanchés par rapport au côté écoulement, caractérisé en ce que le crible-tambour (1) se trouve dans un bac (7) où les solides se déposent par gravité, en ce que les pales d'entraînement (2) sont disposées sur le pourtour du crible-tambour (1) et y sont fixées, en ce qu'un compactage de la matière solide extraite du bac (7) par les pales d'entraînement (2) est effectué par gravité et au moyen d'un volet de pression (11) disposé à l'extrémité du canal de sortie (9), en ce que, derrière le canal de sortie (9), est prévue une curette (12) pour débarrasser le crible-tambour (1) des solides compactés, et en ce que la curette (12) est commandée de manière forcée au rythme du passage des pales d'entraînement (2).

2. Dispositif selon la revendication 1, caractérisé en ce que la conduite d'arrivée (5) présente une section inférieure à celle du bac (7) où les solides se déposent par gravité.

3. Dispositif selon la revendication 1, caractérisé en ce que le volet de pression (11) est monté avec possibilité de rotation et est sollicité au moyen d'un poids réglable (10).

4. Dispositif selon la revendication 1, caractérisé en ce que le volet de pression (11) est conçu sous la forme d'un ressort à lames.

5. Dispositif selon la revendication 1, caractérisé en ce qu'il comprend une douche de liquide (13) dirigée sur le crible-tambour (1) pour nettoyer ledit crible-tambour (1).

6. Dispositif selon la revendication 1, caractérisé en ce qu'il comprend un dispositif à ultrasons (14) disposé à proximité du crible-tambour (1) pour nettoyer ledit crible-tambour (1).

7. Dispositif selon la revendication 1, caractérisé en ce qu'il comprend des pales d'entraînement (2) constituées d'un pied de pale rigide (3) et d'une racle souple (4).

8. Dispositif selon la revendication 7, caractérisé en ce que les racles (4) ne s'étendent que sur une zone partielle du canal de sortie (9).

9. Dispositif selon les revendications 1 et 8, caractérisé en ce que les racles (4) sont décalées les unes par rapport aux autres.

10. Dispositif selon la revendication 1, caractérisé en ce que les pales d'entraînement (2) sont conçues sous forme de cribles.

11. Dispositif selon la revendication 1, caractérisé en ce que l'écoulement du liquide s'effectue dans la direction axiale du crible-tambour (1).

12. Dispositif selon la revendication 1, caractérisé en ce que le canal de sortie (9) est étanché en direction de l'écoulement au moyen de flasques (15) fixés aux faces frontales du crible-tambour (1).
